**Europäisches Patentamt**

**European Patent Office**

**Office européen des brevets**

(11) Numéro de publication: **0 030 488**
A1

(12) ## DEMANDE DE BREVET EUROPEEN

(21) Numéro de dépôt: **80401630.1**

(22) Date de dépôt: **14.11.80**

(51) Int. Cl.³: **B 01 F 7/08,** A 21 C 1/06

(30) Priorité: **30.11.79 FR 7929577**

(43) Date de publication de la demande: **17.06.81**
**Bulletin 81/24**

(84) Etats contractants désignés: **CH DE GB IT LI NL SE**

(71) Demandeur: **PARI S.A. Société Anonyme dite,**
**18, Avenue du Bois Préau, F-92502 Rueil-Malmaison (FR)**

(72) Inventeur: **Ligouzat, Pierre, 18, rue de la Citadelle,**
**F-78450 Chavenay (FR)**

(74) Mandataire: **Moulines, Pierre et al, Cabinet BEAU de**
**LOMENIE 55, rue d'Amsterdam, F-75008 Paris (FR)**

(54) **Pétrisseur pour le travail mécanique de produits liquides, de pâtes et de solides à l'état divisé.**

(57) Pétrisseur pour le travail mécanique de produits liquides, de pâtes et de solides à l'état divisé.

Il est constitué d'un récipient 1 dans lequel est entraîné en rotation au moins un ressort 3, 3a dont les spires sont situées à proximité de la paroi du récipient 1 et dont le fil traverse en permanence la masse de produit qui est refoulée contre l'une des parois d'extrémité 1a du récipient d'où le produit est repris par le ressort 3, 3a pour être travaillé et pétri.

L'invention est utilisée pour le travail mécanique de produits divers.

EP 0 030 488 A1

Pétrisseur pour le travail mécanique de produits liquides, de pâtes et de solides à l'état divisé.

La présente invention a pour objet un pétrisseur pour le travail mécanique de produits liquides, de pâtes et de solides à l'état divisé.

On connaît des appareils mélangeurs qui assurent le mélangeage de produits solides à l'état divisé et de produits liquides, mais ces appareils mélangeurs sont généralement à action rapide et de ce fait n'assurent pas le pétrissage des matières mélangées qui est nécessaire pour certaines applications, par exemple la réalisation de pâtes travaillées telles que des pâtes à pain, pâtes à biscuits, pâtes à quiches etc.

Il est toutefois connu d'utiliser des pétrins mécaniques pour le pétrissage notamment des pâtes, toutefois ces appareils sont de réalisation coûteuse et réclament beaucoup d'énergie pour leur fonctionnement. De plus, ces pétrins mécaniques connus présentent l'inconvénient de ne pas fonctionner en continu.

L'invention a pour objet de fournir un appareil pétrisseur simple, faible consommateur d'énergie et destiné à assurer le pétrissage en continu d'un grand nombre de produits liquides, pâteux ou solides à l'état divisé. En particulier, l'appareil selon l'invention est conçu pour pouvoir avantageusement être adapté à la sortie d'un mélangeur en continu, par exemple du type de celui faisant l'objet du brevet français n° 78 01670 déposé par le même inventeur et publié sous le n° 2 414 952, pour produire en continu, à partir de composants secs et liquides introduits à l'entrée de l'appareil mélangeur, des pâtes travaillées de la façon désirée telles que des pâtes à pain, à pizzas, à biscuits, à quiches, à madeleines etc.

Conformément à l'invention, le pétrisseur est constitué d'un récipient en forme de tube à l'intérieur duquel est entraîné en rotation au moins un ressort hélicoïdal dont les spires sont situées à proximité de la paroi du récipient et dont le fil est destiné à traverser en permanence la masse du produit, ce récipient comportant à une extrémité une entrée pour le produit à travailler alors que son extrémité opposée est fermée et ne présente qu'un orifice réduit ménagé latéralement. La rotation du ressort entraîne le déplacement de la masse de produit vers le fond du récipient contre lequel il vient buter. Le produit a alors tendance à refluer mais, poussé par l'arrivée constante de produit, il sort avec un débit limité par l'orifice pratiqué latéralement à l'extrémité du récipient. A cette extrémité, la perte en charge du ressort est très grande car son fil traverse un produit qui, en raison de l'ouverture réduite de l'orifice pratiqué, a des difficultés à sortir. Le produit, qui subit alors une élévation de température, est efficacement travaillé. La vitesse du ressort est adaptée au produit à travailler ; notamment, pour des pâtes très visqueuses, la rotation du ressort sera très lente alors que, pour des produits à faible viscosité ou des solides à l'état divisé, la vitesse de rotation du ressort pourra être plus grande. Si le produit ou la pâte n'est pas homogène à l'entrée de l'appareil, celui-ci confère au produit une bonne homogénéisation. Par ailleurs, l'appareil suivant l'invention permet d'obtenir une plastification des matières grasses solidifiées (beurre, margarine). On s'est aperçu de plus que, pour des produits à faible viscosité, le procédé permettait d'éviter les formations de mousse.

D'autres caractéristiques et avantages de l'invention seront mieux compris à la lecture de la description qui va suivre de plusieurs modes de réalisation et en se référant aux dessins annexés, sur lesquels :

la figure 1 est une vue en coupe longitudinale d'une première forme d'exécution d'un appareil pétrisseur à fonctionnement en continu selon l'invention ;

la figure 2 est une vue en bout du pétrisseur représenté à la figure 1 ;

la figure 3 est une vue partielle, en coupe longitudinale, d'une variante du pétrisseur des figures 1 et 2 ;

la figure 4 est une vue de dessous d'une autre variante de l'appareil pétrisseur de la figure 3 ;

la figure 5 est une vue en coupe de l'extrémité du tube de l'appareil pétrisseur de la figure 4 ;

la figure 6 est une vue en coupe longitudinale d'une autre forme de réalisation d'un pétrisseur à fonctionnement en continu, comportant un tube disposé à l'intérieur du ressort ;

la figure 7 est une vue en coupe longitudinale d'une autre forme de réalisation d'un pétrisseur à fonctionnement en continu, comportant deux ressorts de pas inverses tournant dans le même sens ; et

la figure 8 est une vue en coupe longitudinale d'une forme de réalisation d'un pétrisseur à fonctionnement en continu, comportant un ressort rotatif et un ressort fixe.

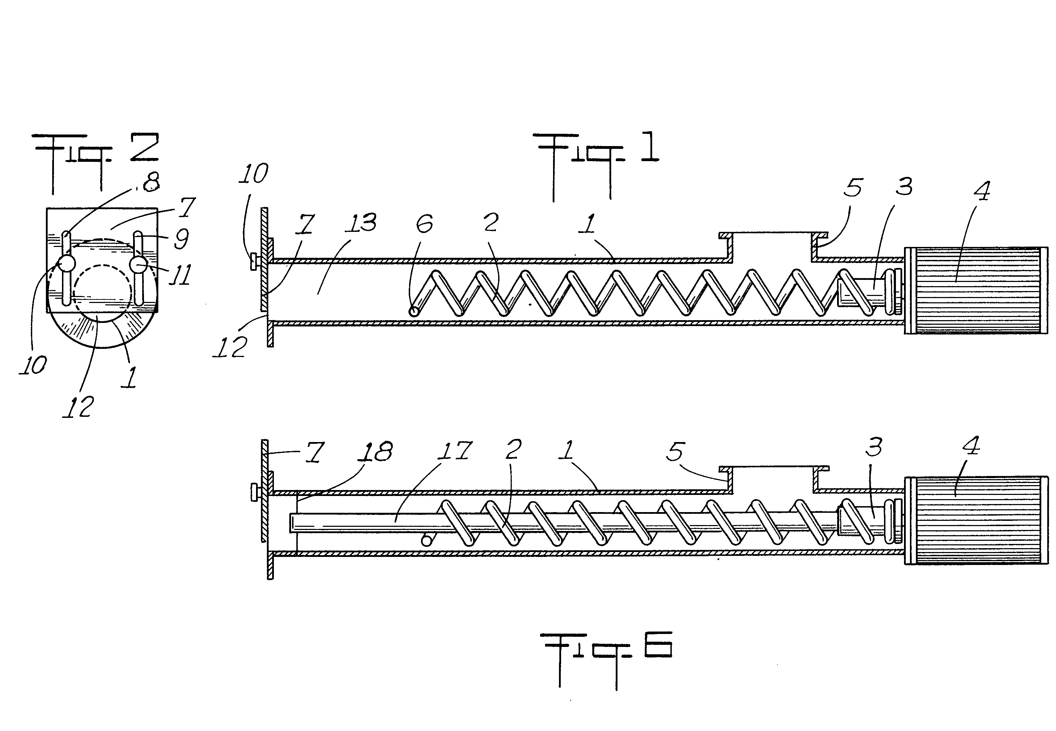

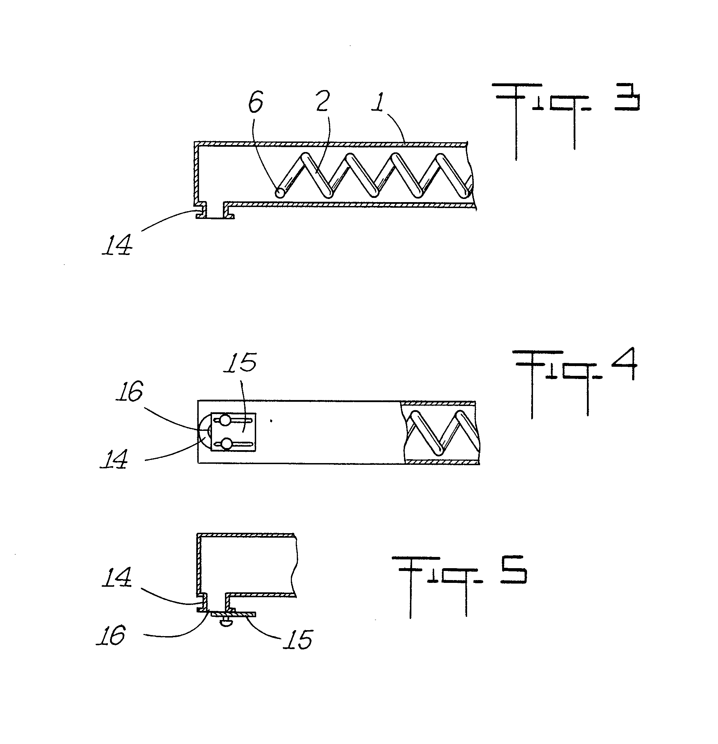

Aux figures 1 et 2, on a représenté un pétrisseur destiné à travailler en continu et qui est constitué d'un tube 1 dans lequel est disposé coaxialement un ressort hélicoïdal 2 solidaire à l'une de ses extrémités d'un arbre d'entraînement 3 d'un moteur 4. Le ressort 2 est situé à proximité de la paroi cylindrique du tube 1, afin d'obtenir un effet combiné entre la paroi du tube et les spires du ressort. A l'une de ses extrémités, le tube 1 présente une tubulure 5 par laquelle on introduit le produit à travailler et, à l'autre extrémité, située en regard de l'extrémité libre 6 du ressort 2, une paroi 7 qui présente des trous oblongs 8, 9 dans lesquels coulissent des tétons 10, 11 solidaires du tube 1. Cette disposition permet de faire coulisser la paroi 7 afin de ménager entre le bord de cette paroi et la paroi du tube 1 un orifice 12 d'évacuation du produit disposé à la périphérie du tube.

Le produit, introduit à l'intérieur du tube 1 par l'ouverture 5, est entraîné le long du tube par la rotation du ressort 2 en subissant un effet de paroi entre le ressort et le tube. Le produit vient buter contre la paroi 7 et reflue pour être repris par le ressort 2 et être travaillé et pétri. Le produit ainsi travaillé, et ayant subi une montée en température, est évacué de façon continue par l'orifice 12 dont le débit est réglable par coulissement de la paroi 7.

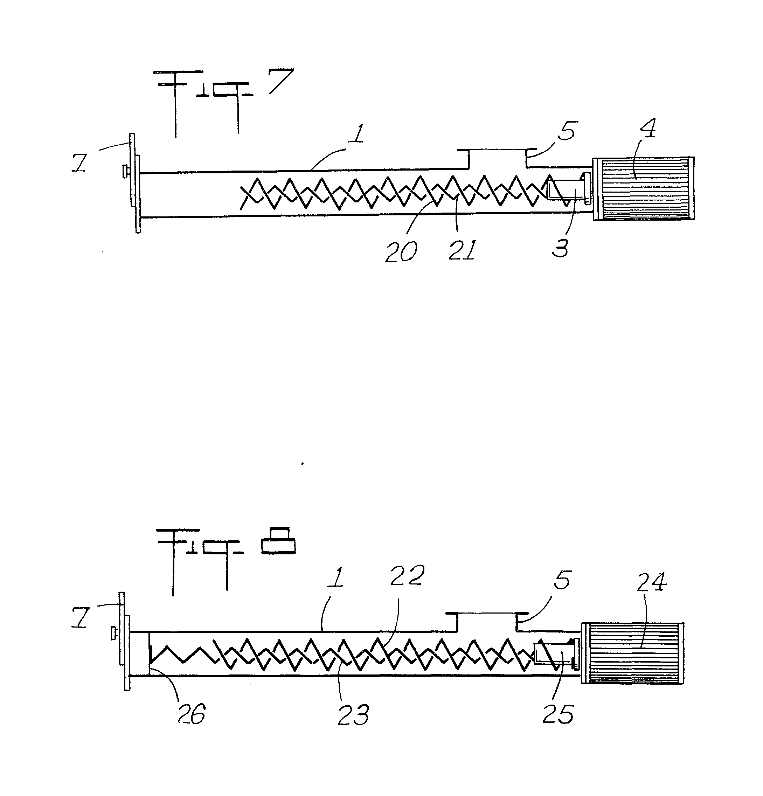

Suivant les produits et l'effet que l'on veut obtenir, on peut prévoir une chambre de compression 13 du produit s'étendant entre l'extrémité 6 du ressort 2 et la paroi 7 disposée à l'extrémité du tube. L'évacuation du produit peut également, en variante, s'effectuer par une tubulure 14 placée à la périphérie du tube 1 comme représenté à la figure 3, l'axe de la tubulure s'étendant perpendiculairement à l'axe du tube dans n'importe quelle direction vers le bas, vers le haut ou latéralement.

Par ailleurs, comme représenté aux figures 4 et 5, cette tubulure est susceptible d'être équipée d'une paroi coulissante 15 montée de la même manière que la paroi 7, afin de permettre l'évacuation du produit à la périphérie de la tubulure par un orifice 16.

Pour renforcer l'effet de paroi entre le tube 1 et le ressort 2 on peut prévoir, selon la forme d'exécution représentée à la figure 6, de munir le dispositif d'un tube 17 disposé à l'intérieur du ressort 2. Le tube intérieur 17, qui est fixé sur le tube extérieur 1 au moyen d'une tige 18, s'étend sur la majeure partie de ce tube extérieur et au-delà du ressort 2. Bien entendu, le tube 17 pourrait être solidaire en rotation du ressort 2.

Selon la forme d'exécution représentée à la figure 7, le pétrisseur comprend deux ressorts hélicoïdaux concentriques 20, 21 de pas inverses, disposés à l'intérieur du tube 1 et qui sont fixés à l'une de leurs extrémités sur l'arbre 3 du moteur 4. De cette manière les ressorts 20, 21 sont entraînés dans le même sens et à la même vitesse, en assurant un travail efficace du produit introduit à l'intérieur de l'appareil.

Selon une autre forme d'exécution représentée à la figure 8, deux ressorts hélicoïdaux concentriques 22, 23 de pas inverses sont disposés à l'intérieur du tube 1 du pétrisseur, le ressort 22 qui est extérieur étant entraîné en rotation par le moteur 24 dont l'arbre 25 est solidaire en rotation du ressort 22, alors que le ressort intérieur 23 est fixe et est relié par l'une de ses extrémités à une tige 26 fixée sur la paroi interne du tube 1.

Bien entendu diverses modifications peuvent être apportées par l'homme de l'art aux dispositifs ou procédés qui viennent d'être décrits uniquement à titre d'exemples non limitatifs sans sortir du cadre de l'invention.

5

0030488

R E V E N D I C A T I O N S

-------------------------------

1. Pétrisseur pour le travail mécanique en continu de produits liquides, de pâtes et de solides à l'état divisé, constitué par un récipient de forme tubulaire présentant à une extrémité une ouverture pour l'introduction du produit à travailler et à l'intérieur duquel est disposé coaxialement au moins un ressort hélicoïdal entraîné en rotation, caractérisé par le fait qu'à son autre extrémité, ledit tube (1) présente une paroi (7) contre laquelle le produit entraîné par le ressort (2) vient refluer pour être repris par ce ressort et être travaillé et pétri, ledit tube (1) présentant à proximité de ladite paroi (7) un orifice (12) d'évacuation du produit disposé à la périphérie du tube.

2. Pétrisseur selon la revendication 1, caractérisé par le fait que la paroi d'extrémité (7) contre laquelle vient refluer le produit est montée coulissante sur l'extrémité du tube (1) pour ménager un orifice (12) d'évacuation du produit entre l'un des bords de la paroi d'extrémité (7) et la paroi du tube (1).

3. Pétrisseur selon la revendication 1, caractérisé par le fait que l'orifice d'évacuation est muni d'une tubulure (14) dont l'axe est situé perpendiculairement à l'axe du tube (1).

4. Pétrisseur selon la revendication 3, caractérisé par le fait que l'orifice d'évacuation du produit est muni d'une paroi coulissante ménageant un orifice périphérique entre l'un de ses bords et la paroi de la tubulure.

5. Pétrisseur selon la revendication 1, caractérisé par le fait qu'une chambre (13) de compression du produit est prévue entre l'extrémité (6) du ressort (2) et la paroi (7) disposée à l'extrémité du tube (1).

6. Pétrisseur selon l'une quelconque des revendications 1 à 5, caractérisé en ce que, à l'intérieur du ressort (2) monté dans un tube extérieur (1), est disposé un tube intérieur (17) fixe ou rotatif s'étendant au-delà du ressort (2) sur la majeure partie du tube extérieur.

7. Pétrisseur selon l'une quelconque des revendication 1 à 5, caractérisé en ce que, dans le tube (1), sont montés deux ressorts concentriques (20, 21) de pas inverses tournant dans le même sens et à la même vitesse.

8.     Pétrisseur selon l'une quelconque des revendications 1 à 5, caractérisé en ce que, dans le tube (1), sont montés deux ressorts concentriques (22, 23) de pas inverses dont un ressort extérieur (22) est entraîné en rotation et un ressort intérieur (23) est fixe.

0030488

Fig. 1

Fig. 2

Fig. 6

Fig. 3

Fig. 4

Fig. 5

Fig. 7

Fig. 8

| Catégorie | Citation du document avec indication, en cas de besoin, des parties pertinentes | Revendica-tion concernée |
|---|---|---|
| | US - A - 3 439 836 (RICCIARDI) <br> * Revendication 1; figures 2-4 * | 1,7,8 |
| | DE - A - 1 935 262 (KURITA) <br> * Revendications 1,2; figures 1, 2 * <br> & FR - A - 2 013 049 | 1,6 |
| | DE - C - 131 726 (SCHROETER) <br> * En entier * | 1 |
| | US - A - 2 521 398 (NORTH) <br> * Revendication 1; figure 1 * | 1 |
| | DE - A - 1 607 776 (KRANZ) <br> * Figure 3 * | 2 |
| | AU - B - 11110/66 (SJOHOLM et al) <br> * Page 5, lignes 9-12; figure 1 * | 2 |
| AP | FR - A - 2 442 013 (MELLA) | |
| D | FR - A - 2 414 952 (LIGOVZAT) | |

## DOCUMENTS CONSIDERES COMME PERTINENTS

**CLASSEMENT DE LA DEMANDE (Int. Cl. 3)**

B 01 F 7/08
A 21 C 1/06

**DOMAINES TECHNIQUES RECHERCHES (Int. Cl. 3)**

B 01 F
B 29 B
A 21 C
B 30 B
A 01 J
A 23 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 13-03-1981 | SALA |

OEB Form 1503.1 06.78